Europäisches Patentamt

European Patent Office

Office européen des brevets

(11) Publication number: **0 389 080 B1**

(12) **EUROPEAN PATENT SPECIFICATION**

(45) Date of publication of patent specification: **22.06.94**    (51) Int. Cl.5: **C09D 5/03**

(21) Application number: **90300049.5**

(22) Date of filing: **03.01.90**

The file contains technical information submitted after the application was filed and not included in this specification

(54) **Powder coatings.**

(30) Priority: **23.03.89 JP 73050/89**

(43) Date of publication of application:
**26.09.90 Bulletin 90/39**

(45) Publication of the grant of the patent:
**22.06.94 Bulletin 94/25**

(84) Designated Contracting States:
**DE FR GB IT**

(56) References cited:
**EP-A- 0 250 183**
**DE-A- 2 437 731**
**US-A- 4 260 066**

(73) Proprietor: **NIPPON PAINT CO., LTD.**
**1-2, Oyodokita 2-chome**
**Kita-ku**
**Osaka-shi Osaka 572(JP)**

(72) Inventor: **Ueno, Tasaburo**
**8-11, Nishino**
**Sakai-shi Osaka-fu(JP)**
Inventor: **Uenaka, Akimitsu**
**2-7-35, Senriyama-nishi**
**Suita-shi Osaka-fu(JP)**
Inventor: **Toyoda, Yuji**

**8-31-101, Kuroba-Haitsu-Tsujisaki**
**Kasuga-cho**
**Takatsuki-shi Osaka-fu(JP)**
Inventor: **Kida, Katsuaki**
**1-4-11-403, Terauchi**
**Toyonaka-shi Osaka-fu(JP)**
Inventor: **Maruta, Masayuki**
**36-5, Kumimatsu-cho**
**Neyagawa-shi Osaka-fu(JP)**
Inventor: **Tsutsui, Koichi**
**13-4, Osumigaoka 5-chome**
**Tanabe-cho**
**Tsuzuki-gun Kyoto-fu(JP)**

(74) Representative: **Lamb, John Baxter et al**
**MARKS & CLERK,**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.0 9/3.3.3)

**Description**

The present invention relates to thermoplastic or thermosetting type powder coatings being excellent in blocking resistance and capable of forming a coating with excellent stain resistance, coating appearance and other desired coating characteristics. The invention also concerns powder coatings being excellent in blocking resistance and capable of forming a coating with matte surface.

In powder coatings area, there are always such demands that intended powder coatings should be excellent in blocking resistance and should give the least amount of fused or agglomerated mass or caking during storage thereof and that such powder coatings should be excellent, when applied by an electrostatic powder coating or a fluidized bed coating and baked, in flowability under molten state so that a smooth surface coating which is free from pinholes or creeping can be obtained therewith. However, since the abovementioned are each conflicting properties, none of the heretofore proposed powder coatings could satisfy the both requirements at the same time. That is, when a low molecular weight resin or a low Tg° (glass transition temperature) resin is selectively used as a binder resin, flowability of the melted resin is indeed improved to some extent, but blocking resistance and sometimes film properties are liable to be lowered. Therefore, at the present days, it is inevitable that resin planning and paint planning are forced to make by making a compromise with only moderate improvements in blocking resistance, flowability and coating properties.

As an approach for the solution of said problems, has been tried the addition of inorganic particles as colloidal silica, siloxane and the like into powder coatings. However, there is a limit in the amount of such particles to be added since an excessively larger amount of such particles will cause undersired loss in gloss or water resistance of the formed coating. Thus, the amount of such particles are only limited to at most about 0.2% by weight, which is totally useless for the intended improvement in blocking resistance of powder coatings.

The inventors have previously succeeded in establishing an effective means for improving both blocking resistance of powder coating and weather resistance , hardness and other desired properties of the formed coating wherein a comparatively larger quantity of crosslinked resin microparticles having an average diameter of 0.01 to 10$\mu$ are added to base powder coatings, and applied a patent on it ( Japanese Patent Publication (unexamined) Sho 62-292869). According to that invention, the resin microparticles used are crosslinked and hence, such microparticles themselves do not flow at the baking stage.

Therefore, a further improved powder coating having excellent flowability and capable of resulting a far better coating with excellent appearance has been desired.

Furthermore, in a household electric appliance area as electric refrigerator, washing machine and the like, a stain resistance of the formed coating is a matter of great concern. Polyester-epoxy type powder coatings are believed to be the most suitable one in respects of corrosion resistance and mechanical properties of the resulted coating and however, even with this type of powder coatings, various problems are pointed in the household electric appliance area, due to its rather poor stain resistance and weather resistance properties. Household electric appliances ( e.g. microwave range, refrigerator and the like) are usually placed at the interior of a house and therefore, they are always exposed to various stains as smoking stain, magic ink stain, foodstuff stain, rouge stain and the like.

Stain resistance of coating may be improved by increasing crosslink density of the coating by using a particular hardening system or a strong hardening catalyst or by increasig Tg value of used resin. However, these techniques will accompany the undesired increase in coating viscosity, resulting a marked loss in finishing appearance of the coating. Therefore, a fully satisfiable coating cannot be expected with these techniques from the standview of coating appearance and stain resistance.

In order to obtain an improved stain resistance as well as an improved weather resistance of coating, special powder coatings had been proposed in Japanese Patent Publication (unexamined) Sho 56-14567, wherein a particular hardening agent obtained by the reaction of p-oxybenzoic acid diglycidyl ester ether with a hydantoin compound was compounded with a polyester resin having a specific acid value and softening point. However, in that technique, the employable resins are of specific type and very expensive hardening agents are selectively used and therefore, the disclosed powder coatings can not be welcomed for generic uses.A more effective and less expensive powder coatings should be developed.

Among various properties of formed coating, weather resistance is another important matter of concern in an automobile industry and other technical fields. For this end, various ultraviolet ray absorbers (UV absorber) as benzophenones, benzotriazoles, benzoic acid phenyl andsalicylic acid phenyl compounds or various antioxidants as phenols, phosphoric acid compounds, sulfur containing compounds and amines are often compounded in powder coating.

However, these additives are comparatively expensive.

2

Furthermore, since the additives must be uniformly compounded with the powder, comparatively larger quantitites of such additives are required for the intended object. Therefore, a more effective and economical solution for the improvement in weather resistance is likewise be desired.

In a separate technical field of household electric appliances, there is an increasing demand for the obtainment of matte surface coating. At that time, the powder coatings used should be, of course, excellent in blocking resistance and the resulted coating should be excelelnt in film properties. To get a matte surface coating, various techniques have been proposed. That is, the first method is to add matting agent in powder coatings, the second one to add a combination of different type of matting agents and the third one is to add a hardening catalyst to powder coatings. Among them, in the first method, a larger quantity of matting agent is required for attaining a sufficient reduction in gloss of the formed coating, which in turn will cause the decrease in coating appearance and desired properties and especially water resistance. Therefore, the quantity of such matting agent is limitted at most about 40% by weight of the total solid, which is rather deficient in having the intended matting effect. Furthermore, in this method, there is an additional problem such that the matting effect is inconsistent depending on the dispersion and kneading conditions. The same is true in the case of the respective second and third methods. There are also additional problems of poor compatibility and hard control of curing reaction in the latter two methods. Thus, fully satisfiable powder coatings have not been offered up to the present days for the matte surface coating.

It is, therefore, a principal object of the invention to provide powder coatings being excellent in blocking resistance and flowability at molten stage, capable of resulting a coating with excellent stain resistance, without the necessity of using any special additives or hardening agent, in an economical way. An additional object of the invention is to provide powder coatings being excellent in blocking resistance, capable of resulting a coating with far improved coating appearance, as well as stain resistance.

A further object of the invention is to provide powder coatings which have the abovementioned characteristics and besides that, can result a coating with far improved weather resistance. A further object of the invention is to provide powder coatings being excellent in blocking resistance and capable of resulting a matte surface coating without losing the desired flowability, stain resistance and film properties The other objects shall be clear from the statements of the specification and accompanying claims.

According to the invention there is provided a coating comprising a mother powder coating having an average particle diameter of 30 to 50 $\mu$m and comprising thermoplastic or thermosetting type binder together with microparticles carried at least on the surface of the respective particles of the mother powder coating formed of an uncrosslinked resin and having an average diameter of 0.001 to 10 $\mu$m, a glass transition temperature of 50 to 150°C and an SP value of 9 to 15, the weight ratio of the microparticles to the total weight of the powder coatings being from 0.05 to 30% by weight.

Thus, in the present invention, is provided powder coatings comprising comparatively large size, resin powder particles and comparatively small size, resin microparticles carried at least on the surface of each large size resin particle. The comparatively large size, resin powder particles may be of thermoplastic or thermosetting nature.

Any of the coating use resins may be advantageously used for said resin powder particles, providing that it is a solid at room temperature and has a film-forming property in its molten state.

Examples of thermoplastic resins are vinyl chloride resin and the like.

Thermosetting type resin powder particles are generally composed of a heat curing type binder resin and a hardening agent. Any of the binder resins and the hardening agents customarily used in heat-curing type powder coatings may be satisfactorily used in this invention. Examples of such resins are acrylic resin, polyester resin, epoxy resin and the like and examples of hardening agents are aminoplast resin, blocked insocyanate , epoxy resin, polyamide resin, isocyanurate compound, aliphatic dibasic acid and the like.

These hardening agents are appropriately selected depending on the functionality of the binder resin used, as , for example, aminoplast, blocked isocyanate or isocyanurate for hydroxy bearing resin; epoxy resin for carboxyl bearing resin; polyamide resin or aliphatic dibasic acid for epoxy bearing resin.

The resin powder particles may be clear or pigmented and may further include other additives as desired. The particle size is from 30 to 50$\mu$ as in conventional powder coatings.

From the foregoing, it will be appreciated that in the present invention, very similar particles as used in the known powder coatings and in some instances heretofore proposed powder coatings themselves can be used as the large size resin particles. For distingushing purpose, such powder coatings used as the large size,resin powder particles may be referred to as " mother powder coatings" hereinunder.

Thus, in the present invention, no particular binder resins, hardening agents, pigments or other additives are required for making the resin powder particles. Any of the conventional , clear or pigmented, powder coatings may be satisfactorily used as resin powder particles.

However, in this invention, at least on the surface of said respective particle, particular resin microparticles must be carried in a specific weight ratio.

That is, the present microparticles must be composed of a resin having a glass transition temperature of 50 to 150°C, preferably 80° to 150°C and a SP value of 9 to 15, preferably 10 to 13, and must have an average particle diameter of 0.001 to 10μ.

The inventors have first found that when resin microparticles having a comparatively high Tg value are present on the surface of such powder coating particle, blocking resistance and hence storage stability of the powder coatings are greatly improved. Further studies revealed that for the improvement of blocking resistance of powder coatings, said Tg should preferably be 50°C or more and most preferably, from the standview of improvement in stain resistance, 80°C or more. However, from the other requirement of flowability, said Tg should be limited to at most 150°C.

Next, the inventors have surprisingly found that for the improvement of stain resistance of the formed coating, solubility parameter (SP) of the resin for microparticles has an important role, and said resin must have a SP value of 9 to 15, besides the requirement of Tg value of 50 to 150°C. More preferably, SP value should be in a range of 10 to 13 and Tg value in a range of 80° to 120°C.

Incidentally, solubility parameter ($\delta$ SP) is a quantitative measure for polarity of a given polymer and may be determined by using the following equation

$$\delta\ SP = (\ \sqrt{V\ ml}\bullet\ \delta\ ml\ +\ \sqrt{V\ mh}.\ \delta\ mh\ )(\ \sqrt{V\ ml}\ +\ \sqrt{V\ mh}\ )$$

(wherein ml: low Sp solvent, mh: high Sp solvent, $\delta$ : solubility parameter , V: molecular volume at cloud point) (see K.W.SUH, J.M. CORBETT; Journal of Applied Polymner Science 12, 2359 (1968))

The exact reasons why the stain resistance is greatly improved by placing such resin microparticles at least on the surface of respective powder coating particle have not been made clear yet and however, at the present days, the inventors take the meanings as follows.

When powder coatings comprising comparatively large size resin powder particles, each particle having at least on the surface thereof a number of resin microparticles is heat-melted for baking, some of the microparticles are buried in the inside of said particle and the other are remained on the surface of powder coatings as they are, since the powder coatings containing no solvent is hardly transformed to a uniform system due to its higher viscosity. Therefore, the surface nature of thus formed coating is very similar to that of the microparticle resin, rather than the nature of said large size resin powder particles. This must be closely connected with the marked improvement in stain resistance of the resulted coating.

Tg value and SP value of a given resin may be easily controlled by those skilled in the art each in the defined range by the selection of species and amounts of the constituting components of the resin. This, however, can be most effectively and easily realized in the case of vinyl resin and therefore, vinyl copolymer microparticles are most preferably used in this invention.

The present resin microparticles are uncrosslinked and should have an average particle diameter of 0.001 to 10μ , preferably 0.01 to 5μ. This particular diameter range had been determined by taking due consideration of preparation easiness and permiscible adding amount of these microparticles. That is, the preparation of microparticles having an average diameter of less than 0.001 is very difficult to do and hence the minimum size will be about 0.001 in practical sense.

Whereas, in obtaining the intended objects of this invention, there is a direct proportional relation-ship between the average size of the microparticles and the adding amounts thereof. If the average diameter exceeds over the upper limit of 10μ, then such microparticles must be used in an amount of 20% by weight or more for obtaining the desired blocking resistance, which in turn causes adverse effects on coating appearance. In that sense, the average diameter of resin microparticles is desirably selected in a range of 0.001 to 10 and the amount of such microparticles in a range of 0.05 to 30% by weight, preferably 0.1 to 20% by weight of the total weight of the powder coatings.

Carrying of the resin microparticles on the surface of the respective resin powder particle may be done by various means. However, the most practical means comprises preparing the resin microparticles in a separate step and adding thus obtained microparticles to the mother powder coatings at any stage during the preparation of said powder coatings.

More specifically, when the mother powder coatings are prepared by a dry method wherein a solid binder resin, hardener and other additives are mixed and milled in a kneader to give pellets, which are then pulverized and shieved, the abovementioned resin microparticles may be added to the coating powders at any stages of said mixing and milling, pulverizing and shieving steps. When the powder coatings are prepared by a wet process comprising dissolving or dispersing a solid binder resin, hardener and other additives in an appropriate solvent and spray-drying the same, the abovementioned resin microparticles

4

may be dispersed in said spray-drying solution or dispersion to obtain the present powder coatings. Mixing of resin powder particles and the resin microparticles may be carried out by using any conventional mixing devices as Super mixer, Henshel mixer, Hybritizer, ball mill and the like. In certain cases, crosslinked resin microparticles having comparatively higher Tg value may be added directly to the melt of mother powder coatings in a comparatively larger quantity and the powder coatings may be formed therefrom. At that time, the resin microparticles may be located both on the surface and in the inside of thus formed powder coating, which is of course within the scope of this invention. The term " carrying" as used herein shall denote all of the abovementioned carrying embodiments.

In the present powder coatings, the resin microparticles are thus located at least on the surface of the resin powder particles, and therefore, during the storage of said powder coatings, there is no fear of the powder particles being directly contacted with each other and there always exist high Tg resin microparticles therebetween. Therefore, undesired blocking is advantageously controlled and more over, desired sliding properties are given to the powder coatings , resulting an improved storage stability of the powder.

Differing from the case of inorganic microparticles, there is no undesirable loss in gloss and lowering in coating appearance. When the uncrosslinked resin microparticles are selected, the microparticles themselves can also be heat-melted to flow, giving a far better coating appearance.

Therefore, such uncrosslinked resin microparticles are selectively used.

The invention shall be now more fully explained in the following examples. Unless otherwise being stated, all parts and % are by weight.

Reference Example 1

Preparation of uncrosslinked resin microparticles (a-1)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 61 parts of methyl methacrylate, 36 parts of styrene and 3 parts of n-butyl methacrylate was dropwise added in 60 minutes. After completion of said addition, the combined was stirred at 80°C for 60 minutes to obtain an emulsion having a non-volatile content of 20%, average diameter of the emulsion being 0.03 to 0.05µ . This emulsion was then subjected to a spray-drying to obtain resin microparticles (a-1) having an average particle diameter of 0.03 to 0.05 , SP 10 and Tg 110°C.

Reference Example 2

Preparation of uncrosslinked resin microparticles (a-2)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 90 parts of methyl methacrylate, 33 parts of styrene,4.6 parts of n-butyl methacrylate and 20 parts of 2-hydroxyethyl methacrylate was dropwise added in 60 minutes. After completion of said addition, the combined was stirred at 80°C for 60 minutes to obtain an emulsion having a nonvolatile content of 20%, average diameter of the emulsion being 0.03 to 0.05µ. This emulsion was then subjected to a spray-drying to obtain resin microparticles (a-2) having an average particle diameter of 0.03 to 0.05 , SP 10 and Tg 50°C.

Reference Example 3

Preparation of uncrosslinked resin microparticles (a-3)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 3 parts of lauryl methacrylate and 97 parts of styrene was dropwise added in 60 minutes. After completion of said addition, the combined was stirred at 80°C for 60 minutes to obtain an emulsion having a non-volatile content of 20%, average diameter of the emulsion being 0.03 to 0.05$\mu$ . This emulsion was then subjected to a spray-drying to obtain resin microparticles (a-3) having SP 8.5 and Tg 90°C.

Reference Example 4

Preparation of uncrosslinked resin microparticles (a-4)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 31 parts of methyl methacrylate, 23 parts of 2-hydroxyethyl methacrylate and 46 parts of styrene was dropwise added in 60 minutes. After completion of said addition, the combined was stirred at 80°C for 60 minutes to obtain an emulsion having a non-volatile content of 20%, average diameter of the emulsion being 0.03 to 0.05$\mu$ . This emulsion was then subjected to a spray-drying to obtain resin microparticles (a-4) having SP 10.5 and Tg 100°C.

Reference Example 5

Preparation of uncrosslinked resin microparticles (a-5) by pulverization method

The acrylic resin (a-7) hereinafter mentioned in Reference Example 7 having Tg value of 100°C was pulverized by means of grinder to obtain uncrosslinked resin microparticles (a-5) having an average diameter of 0.5$\mu$.

Reference Example 6

Preparation of uncrosslinked resin microparticles (a-6) by pulverization method

The acrylic resin (a-7) hereinafter mentioned in Reference Example 7 having Tg value of 100°C was pulverized by means of grinder to obtain uncrosslinked resin microparticles (a-6) having an average diameter of 15$\mu$.

Reference Example 7

Preparation of Tg 100° acrylic resin (a-7)

Into a reaction flask fitted with a dropping funnel, a stirrer and a thermometer, were placed 80 parts of xylene and heated to 130°C. To this, a solution of 36 parts of methyl methacrylate, 10 parts of styrene, 24 parts of glycidyl methacrylate, 5 parts of t-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour.

Thereafter, the combined was maintained at 130°C for 2 hours and xylene was distilled off in vaccuo to obtain an acrylic resin (a-7) having SP 11 and Tg 100°C

Reference Example 8

Preparation of Tg 70° acrylic resin (a-8)

Into a reaction flask fitted with a dropping funnel, a stirrer and a thermometer, were placed 80 parts of xylene and heated to 130°C. To this, a solution of 55 parts of methyl methacrylate, 10 parts of styrene, 30 parts of glycidyl methacrylate, 5 parts of n-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour.

Thereafter, the combined was maintained at 130°C for 2 hours and xylene was distilled off in vaccuo to obtain an acrylic resin (a-8) having Tg = 70°C

Reference Example 9

Preparation of Tg 40 acrylic resin (a-9)

Into a reaction flask fitted with a dropping funnel, a stirrer and a thermometer, were placed 80 parts of xylene and heated to 130°C. To this, a solution of 19 parts of methyl methacrylate, 10 parts of styrene, 30 parts of glycidyl methacrylate, 41 parts of n-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour.

Thereafter, the combined was maintained at 130°C for 2 hours and xylene was distilled off in vaccuo to obtain an acrylic resin (a-9) having Tg = 40.

Reference Example 10

Preparation of polyester powder coatings (a-10)

100 parts of ER 6800 (polyester resin, trademark, Nihon Polyester Co.), 36 parts of Krelan UI (trademark, blocked isocyanate, manufactured by BASF) and 40 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-10).

Reference Example 11

Preparation of acrylic resin powder coatings (a-11)

100 parts of acrylic resin (a-8) obtained in Reference Example 8, 24 parts of decane dicarboxylic acid and 30 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-11).

Reference Example 12

Preparation of acrylic resin powder coatings (a-12)

100 parts of acrylic resin (a-9) obtained in Reference Example 9 24 parts of decane dicarboxylic acid and 30 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-12).

Reference Example 13

Preparation of epoxy resin powder coatings (a-13)

100 parts of Epotohto YD-019 (epoxy resin ,manufactured by Tohto Kasei K.K, trademark), 3 parts of dicyandiamide and 40 parts of titanium oxide were dry-mixed in a Henshel mixer (trademark, Mitui-miike Seisakusho).

Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-13).

Example 1
(uncrosslinked resin microparticles a-1, 1% addition)

To 99 parts of the powder coatings (a-10) obtained in Reference Example 10, 1 part of the uncrosslinked resin microparticles (a-1) obtained in Reference Example 1 was added and the combined was dry-mixed in Henshel mixer for 30 seconds to obtain powder coatings (A-1).

Example 2
(uncrosslinked resin microparticles a-4, 1% addition)

To 99 parts of the powder coatings (a-10) obtained in Reference Example 10, 1 part of the uncrosslinked resin microparticles (a-4) obtained in Reference Example 4 was added and the combined was dry-mixed in Henshel mixer for 30 seconds to obtain powder Coatings (A-2).

Comparative Example 1
(uncrosslinked resin microparticles a-3, 1% addition)

To 99 parts of the powder coatings (a-10) obtained in Reference Example 10, 1 part of the uncrosslinked resin microparticles (a-3) obtained in Reference Example 3 was added and the combined was dry-mixed in Henshel mixer for 30 seconds to obtain powder coatings (CA-1).

Example 3
(uncrosslinked resin microparticles a-5, 0.5% addition)

To 99.9 parts of the powder coatings (a-10) obtained in Reference Example 10, 0.5 part of the uncrosslinked resin microparticles (a-5) obtained in Reference Example 5 was added and the combined was dry-mixed in Henshel mixer for 30 seconds to obtain powder Coatings (A-3).

Comparative Example 2
(uncrosslinked resin microparticles a-6, 0.5% addition)

To 99.9 parts of the powder coatings (a-10) obtained in Reference Example 10, 0.5 part of the uncrosslinked resin microparticles (a-6) obtained in Reference Example 6 was added and the combined was dry-mixed in Henshel mixer for 30 seconds to obtain powder coatings (CA-2).

Example 4
(uncrosslinked resin microparticles a-1, 5% addition)

To 95 parts of the powder coatings (a-10) obtained in Reference Example 10, 5 parts of the uncrosslinked resin microparticles (a-1) obtained in Reference Example 1 were added and the combined was dry-mixed in Henshel mixer for 30 seconds to obtain powder coatings (A-4).

Comparative Example 3
(uncrosslinked resin microparticles a-1, 0.01% addition)

To 99.99 parts of the powder coatings (a-10) obtained in Reference Examples 10, 0.01 part of the uncrosslinked resin microparticles (a-1) obtained in Reference Example 1 was added and the combined was dry-mixed in Henshel mixer for 30 seconds to obtain powder coatings (CA-3).

Comparative Example 4
(uncrosslinked resin microparticles a-1, 30% addition)

To 70 parts of the powder coatings (a-10) obtained in Reference Example 10, 30 parts of the uncrosslinked resin microparticles (a-1) obtained in Reference Example 1 were added and the combined was dry-mixed in Henshel mixer for 30 seconds to obtain powder coatings (CA-4).

Example 5
(uncrosslinked resin microparticles a-1, 5% addition/acrylic resin powder)

To 95 parts of the powder coatings (a-12) obtained in Reference Example 12, 5 parts of the uncrosslinked resin microparticles (a-1) obtained in Reference Example 1 were added and the combined was dry-mixed in Henshel mixer for 30 seconds to obtain powder coatings (A-5).

Comparative Example 5
(containing no resin microparticles)

Acrylic resin powder coatings (a-12) obtained in Reference Example 12 was used as comparative powder coatings (CA-5).

Example 6
(uncrosslinked resin microparticles a-1, 1% addition/epoxy resin powder)

To 99 parts of the powder coatings (a-13) obtained in Reference Example 13, 1 part of the uncrosslinked resin microparticles (a-1) obtained in Reference Example 1 was added and the combined was dry-mixed in Henshel mixer for 30 seconds to obtain powder coatings (A-6).

Comparative Example 6
(containing no resin microparticles)

Epoxy resin powder coatings (a-13) obtained in Reference Example 13 was used as comparative powder coatings (CA-6).

Example 7
(uncrosslinked resin microparticles a-1, 1%addition/polyester resin powder)

To 99 parts of the powder coatings (a-10) obtained in Reference Example 10, 1 part of the uncrosslinked resin microparticles (a-1) obtained in Reference Example 1 was added and the combined was dry-mixed in Henshel mixer for 30 seconds to obtain powder coatings (A-7).

Comparative Example 7
(containing no resin microparticles)

Polyester resin powder coatings (a-10) obtained in Reference Example 12 was used as comparative powder coatings (CA-7).

Thus obtained powder coatings A-1 to A-7 and CA-1 to CA-7 were evaluated as follows:

1) Blocking resistance test:

The test powder was stored at 40°C for 1 month and thereafter the flow property of the powder coatings was visually examined. Blocking resistance was evaluated by the following criteria:

| ○ | no mass, excellent flow |
| △ | certain re-pulverizable masses |
| X | many unpulverizable masses |

2) Coating appearance test:

The test powder was applied onto a soft steel plate previously treated with a zinc phosphate bath, to a film thickness of 30 to 40μ by an electrostatic coating and the coating was baked at 180°C for 20 minutes. The coating appearance was visually examined and evaluated.

| ○ | good |
| △ | slight reduction in gloss and certain rounds |
| X | no good, almost no gloss, many rounds |

3) Stain resistance tests:

(a) Magic ink stain resistance:

Magic ink lines were drawn on the test coating and after elapsing 1 day, said lines were slightly mopped with gauze moistened with methanol.
○ no trace of magic ink
△ slight trace of magic ink
X distinct and clear magic ink lines

(b) Smoke stain resistance:

Into a closed test room filled with tobacco smoke, the test plate was kept standing for 24 hours. Thereafter, the test plate was washed with water using a neutral detergent and degree of remaining smoke-strain was examined by naked eyes and by color difference($\triangle$b) between colored portion and original uncolored portion
○ color difference ($\triangle$b) is less than 0.3
△ color difference ($\triangle$b) is from 0.3 to less than 1
X color difference ($\triangle$b) is 1 or more
The test results are shown in Table 1.

Reference Example 14

Preparation of uncrosslinked resin microparticles (a-14)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 19 parts of 2-hydroxyethyl methacrylate,20 parts of styrene and 61 parts of n-butyl methacrylate was dropwise added in 60 minutes. After completion of said addition, the combined was stirred at 80°C for 60 minutes to obtain an emulsion having a non-volatile content of 20%, average diameter of the emulsion being 0.03 to 0.05$\mu$ . This emulsion was then subjected to a spray-drying to obtain resin microparticles (a-14) having SP 10.0 and Tg 40°C.

Reference Example 15

Preparation of uncrosslinked resin microparticles (a-15)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 85 parts of methyl methacrylate, 5 parts of styreene and 10 parts of n-butyl methacrylate was dropwise added in 60 minutes. After completion of said addition, the combined was stirred at 80°C for 60 minutes to obtain an emulsion having a non-volatile content of 20%, average diameter of the emulsion being 0.03 to 0.05$\mu$. This emulsion was then subjected to a spray-drying to obtain resin microparticles (a-15) having SP 10.5 and Tg 100°C.

Reference Example 16

Preparation of uncrosslinked resin microparticles (a-16)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 85 parts of methyl methacrylate, 5 parts of styrene and 10 parts of n-butyl methacrylate was dropwise added in 60 minutes.

After completion of said addition, the combined was stirred at 80°C for 60 minutes to obtain an emulsion having a non-volatile content of 20%, average diameter of the emulsion being 0.3μ . This emulsion was then subjected to a spray-drying to obtain resin microparticles (a-16) having SP 10.5 and Tg 100°C.

Reference Example 17

Preparation of uncrosslinked resin microparticles (a-17)

Into a reaction flask fitted with a stirrer, a condenser and a thermoregulator, were placed 380 parts of deionized water and 2 parts of nonionic surfactant MON2 (trademark, Sanyo Kasei K.K.) and the mixture was heated under stirring at 80°C to get a clear solution. To this, a solution of 1 part of ammonium persulfate (initiator) in 10 parts of deionized water was added and then a mixture of 61 parts of methyl methacrylate, 36 parts of styrene and 3 parts of n-butyl methacrylate was dropwise added in 60 minutes.

After completion of said addition, the combined was stirred at 80°C for 60 minutes to obtain an emulsion having a non-volatile content of 20%, average diameter of the emulsion being 0.03 to 0.05μ . This emulsion was then subjected to a spray-drying to obtain resin microparticles (a-17) having SP 10.0 and Tg 110°C.

Reference Example 18

Preparation of uncrosslinked resin microparticles (a-18) by pulverization method

The acrylic resin (a-23) hereinafter mentioned in Reference Example 23 having Tg value of 90°C was pulverized by means of grinder to obtain uncrosslinked resin microparticles (a-20) having an average diameter of 15μ .

Reference Example 19

Preparation of uncrosslinked resin microparticles (a-19) by pulverization method

The acrylic resin (a-23) hereinafter mentioned in Reference Example 23 having Tg value of 90°C was pulverized by means of grinder to obtain uncrosslinked resin microparticles (a-19) having an average diameter of 0.5μ .

Reference Example 20

Epoxy resin YD-019 (trademark, manufactured by Tohto Kasei K.K.) was pulverized by means of grinder to obtain uncrosslinked epoxy resin microparticles having an average diameter of 0.5μ.(a-20)

Reference Example 21

Preparation of Tg 70 acrylic resin (a-21)

Into a reaction flask fitted with a dropping funnel, a stirrer and a thermometer, were placed 80 parts of xylene and heated to 130°C. To this, a solution of 55 parts of methyl methacrylate, 10 parts of styrene, 30 parts of glycidyl methacrylate, 5 parts of n-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour.

Thereafter, the combined was maintained at 130°C for 2 hours and xylene was distilled off in vaccuo to obtain an acrylic resin (a-21) having Tg = 70°C

Reference Example 22

Preparation of Tg 40 acrylic resin (a-22)

Into a reaction flask fitted with a dropping funnel, a stirrer and a thermometer, were placed 80 parts of xylene and heated to 130°C. To this, a solution of 19 parts of methyl methacrylate, 10 parts of styrene, 30 parts of glycidyl methacrylate, 41 parts of n-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour.

Thereafter, the combined was maintained at 130°C for 2 hours and xylene was distilled off in vaccuo to obtain an acrylic resin (a-22) having Tg = 40°C.

Reference Example 23

Preparation of Tg 90 acrylic resin (a-23)

Into a reaction flask fitted with a dropping funnel, a stirrer and a thermometer, were placed 80 parts of xylene and heated to 130°C. To this, a solution of 36 parts of methyl methacrylate, 10 parts of styrene, 24 parts of glycidyl methacrylate, 24 parts of n-butyl methacrylate, 30 parts of t-butyl methacrylate and 6 parts of Kayaester O (initiator) was dropwise added from a dropping funnel in 3 hours. After completion of said addition, the content was maintained at the same temperature for 30 minutes and then a mixture of 20 parts of xylene and 1 part of Kayaester O was dropwise added in 1 hour. Thereafter, the combined was maintained at 130°C for 2 hours and xylene was distilled off in vaccuo to obtain an acrylic resin (a-23) having Tg = 90°C.

Reference Examples 24

Preparation of acrylic resin powder coatings (a-24)

100 parts of acrylic resin (a-21) obtained in Reference Example 21, 24 parts of decane dicarboxylic acid and 30 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-24).

Reference Example 25

Preparation of polyester powder coatings (a-25)

100 parts of ER 6800 (polyester resin, trademark, Nihon Polyester Co.), 36 parts of Krelan Ul (trademark, blocked isocyanate, manufactured by BASF) and 40 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-25).

Reference Example 26

Preparation of epoxy resin powder coatings (a-26)

100 parts of Epotohto YD-019 (epoxy resin ,manufactured by Tohto Kasei K.K., trademark), 3 parts of dicyandiamide and 40 parts of titanium oxide were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-26).

Reference Example 27

Preparation of Tg 40 acrylic resin powder coatings (a-27)

100 parts of acrylic resin (a-22) obtained in Reference Example 22 and 24 parts of decane dicarboxylic acid were dry-mixed in a Henshel mixer (trademark, Mitui-miike Seisakusho). Next, the mixture was melt-kneaded in Co-keader PR-46 (manufactured by Bus in Swizerland) at 100°C and then allowed to cool. The solid mass was pulverized in a hammer mill and shieved with a 150 mesh wire screen to obtain powder coatings (a-27).

Example 8
(uncrosslinked resin microparticles a-15, 1% addition)

To 99 parts of the powder coatings (a-24) obtained in Reference Example 24, 1 part of the uncrosslinked resin microparticles (a-15) obtained in Reference Example 15 was added and the combined was dry-mixed in Henshel mixer for 30 seconds to obtain powder coatings (A-8).

Comparative Example 8

To 99 parts of the powder coatings (a-24) obtained in Reference Example 24, 1 part of the uncrosslinked resin microparticles (a-14) obtained in Reference Example 14 was added and the combined was dry-mixed in Henshel mixer for 30 seconds to obtain powder coatings (CA-8).

Example 9
(uncrosslinked resin microparticles a-18, 1% addition)

To 99 parts of the powder coatings (a-24) obtained in Reference Example 24, 1 part of the uncrosslinked resin microparticles (a-16) obtained in Reference Example 16 was added and the combined was dry-mixed in Henshel mixer for 30 seconds to obtain powder coatings (A-9).

Comparative Example 9
(uncrosslinked resin microparticles a-18, 1% addition)

To 99 parts of the powder coatings (a-24) obtained in Reference Example 24, 1 part of the uncrosslinked resin microparticles (a-18) obtained in Reference Example 18 was added and the combined was dry-mixed in Henshel mixer for 30 seconds to obtain powder coatings (CA-9).

Example 10
(uncrosslinked resin microparticles a-16, 20% addition)

To 80 parts of the powder coatings (a-24) obtained in Reference Example 24, 20 parts of the uncrosslinked resin microparticles (a-16) obtained in Reference Example 16 were added and the combined was dry-mixed in Henshel mixer for 30 seconds to obtain powder coatings (A-10).

Comparative Example 10
(uncrosslinked resin microparticles a-17, 0.01% addition)

To 99.99 parts of the powder coatings (a-24) obtained in Reference Example 24, 0.01 part of the uncrosslinked resin microparticles (a-17) obtained in Reference Example 17 was added and the combined was dry-mixed in Henshel mixer for 30 seconds to obtain powder coatings (CA-10).

Comparative Example 11
(uncrosslinked resin microparticles a-17, 40% addition)

To 60 parts of the powder coatings (a-24) obtained in Reference Example 24, 40 parts of the uncrosslinked resin microparticles (a-17) obtained in Reference Example 17 were added and the combined was dry-mixed in Henshel mixer for 30 seconds to obtain powder coatings (CA-11).

Comparative Example 12
(Acrylic resin powder coatings containing no resin microparticles)

The acrylic resin powder coatings obtained in Reference Example 24 was used as comparative powder coatings (CA-12).

Example 11
(uncrosslinked resin microparticles a-15, 1% addition/polyester resin powder)

To 99 parts of the powder coatings (a-25) obtained in Reference Example 25, 1 part of the uncrosslinked resin microparticles (a-15) obtained in Reference Example 15 was added and the combined was dry-mixed in Henshel mixer for 30 seconds to obtain powder coatings (A-11).

Example 12
(uncrosslinked resin microparticles a-15, 1% addition/epoxy resin powder)

To 99 parts of the powder coatings (a-26) obtained in Reference Example 26, 1 part of the uncrosslinked resin microparticles (a-15) obtained in Reference Example 15 was added and the combined was dry-mixed in Henshel mixer for 30 seconds to obtain powder coatings (A-12).

Example 13
(uncrosslinked resin microparticles a-19, 1% addition)

To 99 parts of the powder coatings (a-24) obtained in Reference Example 24, 1 part of the uncrosslinked resin microparticles (a-19) obtained in Reference Example 19 was added and the combined was dry-mixed in Henshel mixer for 30 seconds to obtain powder coatings (A-13).

Example 14
(uncrosslinked resin microparticles a-20, 1% addition)

To 99 parts of the powder coatings (a-24) obtained in Reference Example 24, 1 part of the uncrosslinked resin microparticles (a-20) obtained in Reference Example 20 was added and the combined was dry-mixed in Henshel mixer for 30 seconds to obtain powder coatings (A-14).

Example 15
(uncrosslinked resin microparticles a-15, 5% addition/acrylic resin powder)

To 95 parts of the powder coatings (a-27) obtained in Reference Example 27, 5 parts of the uncrosslinked resin microparticles (a-15) obtained in Reference Example 15 were added and the combined was dry-mixed in Henshel mixer for 30 seconds to obtain powder coatings (A-15).

Comparative Example 13
(containing no resin microparticles)

Acrylic resin powder coatings (a-28) obtained in Reference Example 27 was used as comparative powder coatings (CA-13). The respective powder coatings A-8 to A-15 and CA-8 to CA-13 were evaluated as previously mentioned and test results were shown in Table 2.

## Table 1

| Example | 1 | 2 | 3 | 4 | 6 | 7 | 8 |
|---|---|---|---|---|---|---|---|
| Powder coatings | A-1 | A-2 | A-3 | A-4 | A-6 | A-7 | A-8 |
| mother powder | | | | | | | |
|    a-10 | 99 | 99 | 99.5 | 95 | | | 99 |
|    a-11 | | | | | | | |
|    a-12 | | | | | 95 | | |
|    a-13 | | | | | | 99 | |

### microparticles

| type | Tg | SP | diam. | | | | | | | |
|---|---|---|---|---|---|---|---|---|---|---|
| a-1 | 110 | 10 | 0.03-0.05 | 1 | | | 5 | | | |
| a-4 | 100 | 10.5 | 0.03-0.05 | | 1 | | | | | |
| a-5 | 90 | 11 | 0.5 | | | | 0.5 | | | |

### Evaluation

| | 1 | 2 | 3 | 4 | 6 | 7 | 8 |
|---|---|---|---|---|---|---|---|
| blocking resistance | 0 | 0 | 0 | 0 | 0 | 0 | 0 |
| appearance 60° gloss | 0 | 0 | 0 | 0 | 0 | 0 | 0 |
| stain resistance   magic ink | 0 | 0 | 0 | 0 | 0 | 0 | 0 |
| ibid    tobacco smoke | 0 | 0 | 0 | 0 | 0 | 0 | 0 |

EP 0 389 080 B1

Table 1(continued)

| Comparative Example | | | 1 | 2 | 3 | 4 | 5 | 6 | 7 |
|---|---|---|---|---|---|---|---|---|---|
| Powder coatings | | | CA-1 | CA-2 | CA-3 | CA-4 | CA-5 | CA-6 | CA-7 |
| mother powder | | | | | | | | | |
| a-10 | | | 99 | 99.5 | 99.99 | 70 | | | 100 |
| a-11 | | | | | | | | | |
| a-12 | | | | | | | 100 | | |
| a-13 | | | | | | | | 100 | |
| microparticles | | | | | | | | | |
| type | Tg | SP diam. | | | | | | | |
| a-1 | 110 | 10  0.03-0.05 | | | 0.01 | 30 | | | |
| a-3 | 90 | 8.5 0.03-0.05 | 1 | | | | | | |
| a-5 | 90 | 11  0.5 | | | | | | | |
| a-6 | 90 | 11  15 | | 0.5 | | | | | |
| Evaluation | | | | | | | | | |
| blocking resistance | | | 0 | 0 | Δ | 0 | X | Δ | Δ |
| appearance 60° gloss | | | 0 | X | 0 | X | 0 | 0 | 0 |
| stain resistance  magic ink | | | Δ | Δ | Δ | 0 | X | X | X |
| ibid        tobacco smoke | | | X | X | Δ | 0 | X | X | X |

EP 0 389 080 B1

Table 2

| Example | 8 | 9 | 10 | 11 | 12 | 13 | 14 | 15 |
|---|---|---|---|---|---|---|---|---|
| Powder coatings | A-8 | A-9 | A-10 | A-11 | A-12 | A-13 | A-14 | A-15 |
| mother powder | | | | | | | | |
|   a-24 | 99 | 99 | 80 | | | 99 | 99 | |
|   a-25 | | | | 99 | | | | |
|   a-26 | | | | . | 99 | | | |
|   a-27 | | | | | | | | 95 |

microparticles

| type | Tg | SP | diam. | 8 | 9 | 10 | 11 | 12 | 13 | 14 | 15 |
|---|---|---|---|---|---|---|---|---|---|---|---|
| a-15 | 100 | 10.5 | 0.03-0.05 | 1 | | | 1 | 1 | | | 5 |
| a-16 | 100 | 10.5 | 0.3 | | 1 | 20 | | | | | |
| a-19 | 90 | 9.95 | 0.5 | | | | | | 1 | | |
| a-20 | 50 | 10.1 | 0.5 | | | | | | | 1 | |

Evaluation

| | 8 | 9 | 10 | 11 | 12 | 13 | 14 | 15 |
|---|---|---|---|---|---|---|---|---|
| blocking resistance | 0 | 0 | 0 | 0 | 0 | 0 | 0 | 0 |
| appearance 60° gloss | 0 | 0 | 0 | 0 | 0 | 0 | 0 | 0 |
| stain resistance   magic ink | 0 | 0 | 0 | 0 | 0 | 0 | Δ | 0 |

EP 0 389 080 B1

Table 2(continued)

| Comparative Example | 8 | 9 | 10 | 11 | 12 | 13 |
| | CA-8 | CA-9 | CA-10 | CA-11 | CA-12 | CA-13 |
|---|---|---|---|---|---|---|
| **Powder coatings** | | | | | | |
| mother powder | | | | | | |
| a-24 | 99 | 99 | 99.99 | 60 | 100 | 100 |
| a-25 | | | | | | |
| a-26 | | | | | | |
| a-27 | | | | | | |
| **microparticles** | | | | | | |
| type Tg SP diam. | | | | | | |
| a-14 40 10 0.03-0.05 | 1 | | 0.01 | 40 | | |
| a-17 10 10 0.03-0.05 | | | | | | |
| a-18 90 9.95 15 | | 1 | | | | |
| **Evaluation** | | | | | | |
| blocking resistance | x | △-x | △-x | O | x | x |
| appearance 60° gloss | O | x | O | x | O | O |
| stain resistance magic ink | x | O | O | O | △ | x |

## Claims

1. A powder coating comprising a mother powder coating having an average particle diameter of 30 to 50 $\mu$m and comprising thermoplastic or thermosetting type binder together with microparticles carried at least on the surface of the respective particles of the mother powder coating formed of an uncrosslinked resin and having an average diameter of 0.001 to 10 $\mu$m, a glass transition temperature of 50 to 150°C and an SP value of 9 to 15, the weight ratio of the microparticles to the total weight of the powder coatings being from 0.05 to 30% by weight.

2. A powder coating according to claim 1 wherein the glass transition temperature of the microparticle resin is from 80 to 150°C.

## Patentansprüche

1. Pulverbeschichtung, umfassend eine Ausgangs-Pulverbeschichtung mit einem mittleren Teilchendurchmesser von 30 $\mu$m bis 50 $\mu$m und umfassend Bindemittel vom thermoplastischen oder warmhärtbaren Typ gemeinsam mit Mikroteilchen, die mindestens auf der Oberfläche der entsprechenden Teilchen der Ausgangs-Pulverbeschichtung getragen werden, welche aus einem nichtvernetzten Kunstharz gebildet werden und einen mittleren Durchmesser von 0,001 $\mu$m bis 10 $\mu$m aufweisen, eine Glasübergangstemperatur von 50 °C bis 150 °C und einen SP-Wert von 9 bis 15, wobei das Gewichtsverhältnis der Mikroteilchen zur Gesamtmasse der Pulverbeschichtungen von 0,05 % bis 30 Gew.% beträgt.

2. Pulverbeschichtung nach Anspruch 1, bei welcher die Glasübergangstemperatur des Mikroteilchen-Kunstharzes 80 °C bis 150 °C beträgt.

## Revendications

1. Revêtement en forme de poudre comprenant un revêtement de poudre mère ayant un diamètre particulaire moyen de 30 à 50 $\mu$m et comprenant un liant du type thermoplastique ou thermodurcissable en même temps que des microparticules portées au moins sur la surface des particules respectives du revêtement de poudre mère formées d'une résine non réticulée et ayant un diamètre moyen de 0.001 à 10 $\mu$m, une température de transition vitreuse de 50 à 150 °C et une valeur SP de 9 à 15, le rapport pondéral des microparticules sur le poids total des revêtements en forme de poudre étant compris entre 0.05 et 30% en poids.

2. Revêtement en forme de poudre selon la revendication 1, dans lequel la température de transition vitreuse de la résine de microparticules est comprise entre 80 et 150 °C.